# EUROPEAN PATENT SPECIFICATION

(11) **EP 2 694 621 B1**
(45) Date of publication and mention of the grant of the patent: **12.09.2018**
(21) Application number: 12715417.7
(22) Date of filing: 04.04.2012
(51) Int. Cl.: C10G 3/00, C10G 55/04, C10G 9/00, C10L 1/04

(54) **METHODS FOR THE PRODUCTION OF FUEL**
VERFAHREN ZUR HERSTELLUNG VON BRENNSTOFF
PROCÉDÉS UTILISABLES EN VUE DE LA PRODUCTION DE CARBURANT

(30) Priority: 08.04.2011 GB 201105945
(43) Date of publication of application: 12.02.2014
(73) Proprietor: WSE Limited, 52428 Jülich (DE)
(72) Inventor: WIRTZ, Ulrich, 52428 Julich (DE); HORNUNG, Andreas, 76185 Karlsruhe (DE)
(74) Representative: Oxley, Rachel Louise
(86) International application number: PCT/GB2012/000311
(87) International publication number: WO 2012/136955

(56) References cited:
- EP-A1- 1 892 280
- DE-A1- 2 335 263
- US-A1- 2010 299 990
- MACELO E. DOMINE ET AL: "COPROCESSING OF OXYGENATED BIOMASS COMPOUNDS AND HYDROCARBONS FOR THE PRODUCTION OF SUSTAINABLE FUEL", CHEMSUSCHEM, vol. 1, 4 February 2008 (2008-02-04), pages 179-181, XP002676262,
- GABRIELLA FOGASSY ET AL.: "BIOMASS DERIVED FEEDSTOCK CO-PROCESSING WITH VACUUM GAS OIL FOR SECOND-GENERATION FUEL PRODUCTION IN FCC UNITS.", APPLIED CATLYSIS B: ENVIRONMENTAL, vol. 96, 9 March 2010 (2010-03-09), pages 476-485, XP002676263,
- GABRIELA FOGASSY ET AL.: "BIO-OILS IN REFINERY OPERATIONS", 2ND NORDIC WOOD BIOREFINERY CONFERENCE , 3 September 2009 (2009-09-03), page 12PP, XP002676264, Retrieved from the Internet: URL:http://www.biocoup.com/fileadmin/user/ pdf/18.03.10/44_BIOCOUP_CNRS_Jul09.pdf [retrieved on 2012-05-21]

## Description

### BACKGROUND TO THE INVENTION

### Field of the Invention

The present invention relates to a reaction method for producing fuel by reaction of bio-oil with hydrocarbon oil and/or hydrocarbon melt.

### Related Art

Cracking is the process of breaking down large molecules into smaller ones, typically through a thermal or catalytic method. Typically, the term "cracking" is used with reference to the breakdown of large hydrocarbon molecules into smaller ones. However, the term is applicable to the breakdown of any large molecule, for example the breakdown of polymers, oils and waxes.

Cracking is typically employed in the petrochemicals industry, to "upgrade" heavy oil (e.g. heavy fractions of crude oil produced from fractionating crude oil) to lighter products, useful in fuel applications. For example, these heavy fractions, such as bituminous residue, may be cracked to provide liquid petroleum gas, petrol and diesel. Heavy oils (including heavy oil fractions and heavy crude oil) are typically unsuitable for use as fuels, at least in some applications, and are typically difficult to handle and process, due to their high viscosity.

Cracking can also be employed to break polymers down into smaller molecules. For example, synthetic polymers may be cracked, and in this way it is possible to break down plastics waste.

Typical cracking methods require high temperatures, high pressures and/or the presence of a catalyst. Thermal cracking methods have largely been replaced by catalytic cracking methods, such as fluid catalytic cracking.

Biomass pyrolysis is the thermal decomposition of biomass (e.g. plant material such as wood and wood bark) substantially in the absence of oxygen. Biomass is typically a mixture of hemicellulose, cellulose, lignin and small amounts of other organics.

These components typically pyrolyse or decompose at different rates and by different mechanisms and pathways.

As a consequence, biomass pyrolysis results in a complex mixture of products. Solid products include char and ash. Typically, after cooling the pyrolysis products include a substantial portion of liquid, and some permanent gases such as H₂, CO, CO₂ and CH₄. These gas products are useful in combined heat and power (CHP) applications, where the gas may be used to produce heat and electricity. This is useful, for example, in rural locations and for on-site generation of heat and power, for example in a biomass processing plant. The gas products may also be useful as starting material in synthetic chemical manufacture, for example for synthesising synthetic natural gas, in the production of ammonia and methanol, and in producing synthetic petroleum (e.g. using the Fischer-Tropsch process).

The liquid phase product of biomass pyrolysis is typically a dark brown liquid, which has a heating value that is around one half of the heating value of conventional fuel oil, and is typically referred to as bio-oil. Bio-oil can be a valuable product of pyrolysis, as it can be easily stored for later use, such as for heat and/or electricity generation. However, it is not suitable for all fuel applications, for example due to its high water content, and presence of elements other than carbon and hydrogen, such as oxygen.

Attempts have been made to co-process liquid products derived from biomass pyrolysis with more traditional sources of fuel, in order to produce "second generation" bio-fuels. For example, Reference 1 describes upgrading bio-oil by hydrodeoxygenation to produce "HDO-oil" and co-processing this HDO-oil with vacuum gas oil in a fluid catalytic cracking (FCC) unit, to product a gasoline fuel product. Similarly, reference 2 describes co-processing HDO-oil and long residue oil in an FCC unit. Reference 3 reviews methods of catalytic hydroprocessing of bio-oil to produce upgraded oils, and reference 4 suggests methods of catalytic deoxygenation of bio-oil to produce oil suitable for processing in petroleum refineries. Reference 5 proposes co-processing HDO-oil with excess fossil fuel feeds in catalytic cracking and catalytic hydrodesulfurisation units.

In these co-processing methods, the biomass-derived oil is provided to the processing unit as a liquid. Typically, char forms on heating the oil in the processing unit. The heavy oil cracking feedstock may then accumulate on the surface of the char, leading to agglomeration of the char into larger particles, which can build up on the reactor walls and may clog the reactor. Accumulation of the heavy oil on the surface of the char in this way can make subsequent processing of the char more difficult, and the energy content of the heavy oil accumulated on the surface of the char may be lost. Furthermore, in order to produce fuel products from co-processing with heavy oils, these methods employ catalysts to crack the heavy oils.

EP1892280 discloses a method where bio-oil is co-fed with petroleum derived hydrocarbon feedstocks into a reactor under cracking conditions to obtain cracked products including fuels.

### SUMMARY OF THE INVENTION

The present inventors have devised the present invention in order to address one or more of the above problems.
The present inventors have found that bio-oil vapour can be useful in the production of fuels by cracking hydrocarbon oils and/or hydrocarbon melts. Surprisingly, where bio-oil vapour is flowed into a reaction zone and heated together with hydrocarbon oil and/or hydrocarbon melt, a product useful as a fuel (e.g. as a diesel fuel) can be produced. This provides a particularly convenient method for cracking hydrocarbon oil and/or hydrocarbon melt. Advantageously, by providing the bio-oil as a vapour, the formation and accumulation of char in the reaction chamber can be reduced or avoided. Furthermore, in some instances, bio-oil may be immiscible with the hydrocarbon oil and/or hydrocarbon melt present in the reactor. In these cases, the interaction between the bio-oil and the hydrocarbon oil and/or hydrocarbon melt is enhanced by flowing bio-oil vapour into the reaction zone.
Surprisingly, where bio-oil vapour is flowed into the reaction zone, it is not necessary to use a catalyst to promote cracking of the hydrocarbon oil and/or hydrocarbon melt. Additionally, the cracking reaction proceeds at a useful rate at lower temperatures than those typically required for thermal cracking methods.
Furthermore, without wishing to be bound by theory, it is believed that the fuel product includes "fragments" derived both from the hydrocarbon oil and/or hydrocarbon melt, and from the bio-oil vapour. Accordingly, a portion of the energy content of the fuel product can be considered to be bio-derived energy, and so the fuel product can be seen as a "second generation" bio-fuel.

Accordingly, in a first preferred aspect, the present invention provides a method for the production of fuel as set out in claim 1.

It will be understood that the bio-oil vapour and the hydrocarbon oil and/or hydrocarbon melt may be heated together without the addition of a catalyst, such as without the addition of a catalyst comprising metal atoms and/or metal ions. For example, the bio-oil vapour and the hydrocarbon oil and/or hydrocarbon melt may be heated together without the separate step of adding a separate catalyst, e.g. substantially in the absence of catalyst.

As used herein, the term "bio-oil vapour" is understood to include vapour of oil products derived from biomass pyrolysis. For example, the term bio-oil vapour is understood to include the condensable vapour product of biomass pyrolysis and/or vapour of the liquid product of pyrolysis. However, the term "bio-oil vapour" is also understood to include vapour of oil produced by processing this liquid and/or condensable vapour product of biomass pyrolysis, such as vapour of HDO-oil.

However, preferably the condensable vapour product of biomass pyrolysis and/or vapour of the liquid product of pyrolysis is used. For example, bio-oil may be produced in a pyrolysis reactor and flowed into the reaction zone as a vapour directly from the pyrolysis reactor. Of course, the bio-oil may be subjected to physical processing steps before it is flowed into the reaction zone as a vapour. Such physical processing steps include filtration (e.g. to remove solid contaminants), distillation (e.g. to reduce its water content) and reheating liquid bio-oil to produce a bio-oil vapour (as described in more detail below).

It will be understood that the term "melt" as used herein includes substances which are typically solid at room temperature and pressure, but which are typically liquid under the conditions in the reaction zone.

Some documents describe co-pyrolysis of biomass with petroleum residue or polyolefins (such as synthetic polymers and plastics waste). For example, references 6 to 8 describe co-pyrolysis of sugar case bagasse and petroleum residue. Reference 9 describes co-pyrolysis of wood biomass/polyolefin mixtures. Reference 10 describes co-pyrolysis of pine cone with synthetic polymers. Reference 11 describes co-pyrolysis of wood and synthetic polymer blends with the addition of zinc chloride. Reference 12 describes co-pyrolysis of biomass and plastics waste. References 13 to 16 describe co-pyrolysis of wood biomass and synthetic polymer mixtures. WO2006/015804 describes a method of producing hydrocarbon-containing oils by heating biomass in the presence of a "contact oil".

However, on pyrolysis of biomass, significant quantities of char are produced in the reaction chamber, resulting in the disadvantages described above. As explained above, flowing bio-oil vapour directly into the reaction chamber reduces or avoids these problems.

Furthermore, where biomass is co-pyrolysed with petroleum or polyolefin, the selection of suitable biomass feedstock is somewhat limited. For co-pyrolysis, typically biomass must be milled to a small particle size. Additionally, co-pyrolysis typically requires low ash biomass feedstock. In contrast, in the methods of the present invention, the biomass feedstock is not limited in this way. Since bio-oil vapour, rather than biomass, is introduced to the reaction chamber, the bio-oil may be produced by different biomass pyrolysis reaction methods, depending on the nature of the feedstock. The preferred embodiments of the invention therefore broaden the range of suitable biomass that may be used.

It will be understood that in the methods of the present invention, the bio-oil vapour and hydrocarbon oil and/or hydrocarbon melt may be heated together substantially in the absence of biomass feedstock.
The present inventors have realised that the invention provides a further advantage. On heating together bio-oil vapour and hydrocarbon oil and/or hydrocarbon melt, some permanent gases, such as H₂, CO, CO₂ and CH₄ are produced, which are useful for example in CHP (combined heat and power) applications as described above. Compared with typical bio-oil gasification methods, the methods of the present invention operate at a lower temperature, and do not require catalyst.

### BRIEF DESCRIPTION OF THE DRAWING

Preferred embodiments of the invention will be described, with reference to the accompanying drawing in which:

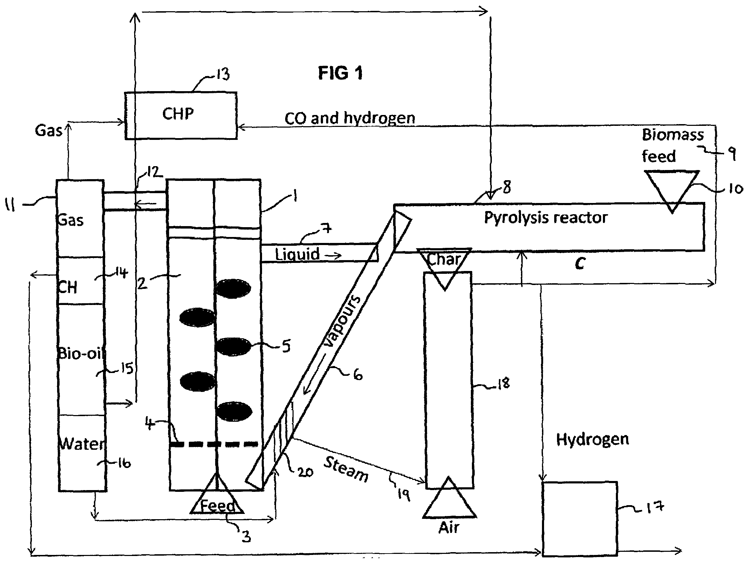

**Fig. 1** illustrates schematically apparatus suitable for the method of the invention.

### DETAILED DESCRIPTION OF THE PREFERRED EMBODIMENTS AND FURTHER OPTIONAL FEATURES

Further preferred and optional features of the invention will now be set out.

In the method of the present invention, bio-oil vapour and hydrocarbon oil and/or hydrocarbon melt are heated together, to produce a fuel product. Without wishing to be bound by theory, the present inventors believe that on heating, radicals deriving from the bio-oil vapour are formed. These radicals are understood to initiate cleavage of bonds in the hydrocarbon oil and/or hydrocarbon melt, and to initiate hydrogen abstraction from the hydrocarbon oil and/or hydrocarbon melt, destabilising the bonds in the hydrocarbon oil and/or hydrocarbon melt and promoting cracking. The bio-oil vapour may also act as a hydrogen source in bond cleavage. This interaction of bio-oil radicals with the hydrocarbon oil and/or hydrocarbon melt is thought also to promote breakdown of the bio-oil vapour, into fragments which can react with cracked fragments of the hydrocarbon oil and/or hydrocarbon melt, and into gasification products. In this way, the interaction of the bio-oil vapour with the hydrocarbon oil and/or hydrocarbon melt promotes both formation of a fuel product by cracking the hydrocarbon oil and/or hydrocarbon melt (and incorporation of bio-oil fragments), and gasification of the bio-oil vapour.

The present invention is particularly useful in the production of a fuel product, as discussed above. However, it will be apparent to the skilled person on reading this disclosure that the present invention may also provide a useful gasification process, e.g. a process for the gasification of bio-oil vapour. (It will be understood that as used herein, the term gasification refers to the production of permanent gas products such as CO, CO₂, H₂ and CH₄.)

The hydrocarbon oil and/or hydrocarbon melt comprises substances having carbon-carbon bonds and/or carbon-hydrogen bonds, since such substances are believed to be particularly suitable for interaction with the bio-oil radicals. Particularly suitable are substances comprising one or more chains of carbon atoms linked by carbon-carbon bonds, for example chains comprising 2 or more, 3 or more, 4 or more, 5 or more, 10 or more, 15 or more, or 20 or more carbon atoms.

It will be understood that the present invention is suitable for cracking mixtures of hydrocarbon oils and/or hydrocarbon melts, for example mixtures of the substances described herein. The nature of the hydrocarbon polymers suitable as the hydrocarbon oil and/or hydrocarbon melt is not particularly limited in the present invention. Particularly suitable are hydrocarbon polymers comprising one or more chains of carbon atoms linked by carbon-carbon bonds, for example chains comprising 2 or more, 3 or more, 4 or more, 5 or more, 10 or more, 15 or more, or 20 or more carbon atoms. Example hydrocarbon polymers comprising chains of carbon atoms linked by carbon-carbon bonds include polyolefins (including polyethylene, polypropylene, polybutylene, polybutadiene, and so on), polystyrene and polyvinyl chloride. For example, waste plastics material may be used.

Hydrocarbons include petroleum, petroleum fractions and synthetic (e.g. polymeric) hydrocarbons such as polyolefins (including polyethylene, polypropylene, polybutylene, polybutadiene, and so on, and polystyrene). Particularly preferred are hydrocarbon oils and/or hydrocarbon melts comprising hydrocarbons having at least 20 carbon atoms. For example, at least 30%, 40% or 50% by weight of the hydrocarbon oil and/or hydrocarbon melt may be hydrocarbons having at least 20 carbon atoms. There is no particular upper limit on the number of carbon atoms in the hydrocarbon. However, the substance should typically be liquid at the temperature and pressure of the reaction chamber. For example, C₂₀ to C₄₀ or C₂₀ to C₅₀ hydrocarbons may be suitable. The hydrocarbon oil and/or hydrocarbon melt may comprise predominantly C₂₀ to C₄₀ or C₂₀ to C₅₀ hydrocarbons.

The nature of petroleum suitable as the hydrocarbon oil and/or hydrocarbon melt is not particularly limited in the present invention. For example, the hydrocarbon oil and/or hydrocarbon melt may be crude oil. The present invention is particularly suited to processing "heavy crude oil". The term heavy crude oil will be understood by the skilled person. For example, it may be a crude oil having a density of 750 g m⁻³ or more, for example having a density of 800, 900 or 1000 g m⁻³ or more.

Alternatively or additionally, the petroleum may be a petroleum fraction, obtainable through fractionation of crude oil, such as fractionation of heavy crude oil, light crude oil or sweet crude oil. Petroleum residue, which is the residue remaining after fractionation of crude oil, may be used. Other heavy petroleum or petroleum fractions may be used, such as petroleum or petroleum fractions comprising predominantly molecules having at least 20 carbon atoms, for example C₂₀ to C₄₀ or C₂₀ to C₅₀ fractions. For example, heavy fuel oils, such as number 4 fuel oil, number 5 fuel oil and number 6 fuel oil are suitable, the fuel oil grade being determined according to ASTM D396.

The hydrocarbon oil and/or hydrocarbon melt is supplied to the reaction zone as a liquid. It may be supplied to the reaction zone via a hydrocarbon oil and/or hydrocarbon melt inlet port, for example by pumping.

The bio-oil vapour suitable for flowing into the reaction zone is not particularly limited, and may be derived from any suitable pyrolysis method, and from any suitable biomass feedstock. Suitable feedstocks include plant biomass such as wood, bark and straw, biomass-based residue, sewage sludge, paper and lignin. High ash and/or low ash feedstock may be used. The biomass particle size also is not particularly limited. Both coarse and fine particles, and mixtures thereof, are suitable. Typically, most CI, S and N deriving from the biomass is retained in the char produced in the pyrolysis process, and is not present in the bio-oil vapour which passes to the reaction zone. Similarly, the char may retain other components of the biomass, advantageously keeping them from passing into the reaction zone with the bio-oil vapour.

Bio-oil vapour may be flowed from a pyrolysis reactor into the reaction zone, for example directly from a pyrolysis reactor into the reaction zone. For example, bio-oil vapour produced in the pyrolysis reactor may be flowed directly into the reaction zone, without condensing the bio-oil. It will be understood that the methods of the present invention may comprise pyrolysing biomass and flowing bio-oil vapour produced by said pyrolysis into the reaction zone.

The bio-oil vapour flowed into the reaction zone may also comprise permanent gases produced in the pyrolysis reactor, and also may contain water derived from water present in the biomass feedstock and/or produced during the pyrolysis reaction. It will be understood that an inlet conduit, connected to the inlet port, may provide a flow path for bio-oil vapour from a pyrolysis reactor to the reaction zone. The pyrolysis reactor may be a reactor as described in WO2009/138757.

Alternatively or additionally, the bio-oil vapour may be supplied to the reaction zone from a reservoir of bio-oil. In this way, bio-oil which has been produced at another location and/or stored for a period of time can be used. Bio-oil from the reservoir is vaporised before it is flowed into the reaction zone. It will be understood that a suitable apparatus may include a bio-oil reservoir, which may be in fluid communication with the reaction zone.

It will be understood that a small amount of liquid bio-oil may inevitably be present in bio-oil vapour flowed into the reaction zone. However, the skilled person will understand that the bio-oil is preferably flowed into the reaction zone predominantly, for example substantially entirely, as a vapour.

A suitable apparatus may further comprise a liquid port/conduit for transferring liquid (e.g. hydrocarbon oil and/or hydrocarbon melt) from the reaction zone to the bio-oil input port. In this way, hydrocarbon oil and/or hydrocarbon melt from the reaction zone may pass along the inlet conduit and be returned to the reaction chamber. Preferably, the hydrocarbon oil and/or hydrocarbon melt is atomised before it enters the bio-oil inlet port, and accordingly it will be understood that an atomiser may be provided for atomising the hydrocarbon oil and/or hydrocarbon melt. The flow of hydrocarbon oil and/or hydrocarbon melt (e.g. atomised hydrocarbon oil and/or hydrocarbon melt) from the reaction zone along the inlet conduit can help to reduce the build up of solid residue (e.g. char) from the bio-oil vapour on the walls of the inlet conduit, by purging it. For example, hydrocarbon oil and/or hydrocarbon melt may be pumped from the reactor to the bio-oil inlet conduit, or hydrocarbon oil and/or hydrocarbon melt may overflow from the reactor into the liquid port/conduit.

The bio-oil vapour and hydrocarbon oil and/or hydrocarbon melt are heated together in the reaction zone to produce reaction products. Preferably, the reaction zone is a reaction chamber. Preferably, the reaction zone is provided with agitation means, for agitating the bio-oil vapour and the hydrocarbon oil and/or hydrocarbon melt, to promote mixing of these substances. For example, the reaction zone may be provided with stirring means or a mixer pump to cycle the reaction zone contents around the reaction zone. The reaction zone may be provided with one or more augers. However, providing agitation is not essential. In some cases, supplying the bio-oil vapour to the reaction zone may provide sufficient mixing. For example, bio-oil vapour may be provided at the base of the reaction zone, and bubbled through the hydrocarbon oil and/or hydrocarbon melt in the zone.

The reaction zone may have a settling unit, for capturing settling solid reaction products.

A typical temperature in the reaction zone is 450°C. At this temperature, the reactions proceed at a useful rate. Preferably, the temperature in the reaction zone is at least about 300°C, more preferably at least about 310°C, at least about 320°C, at least about 330°C, at least about 340°C, at least about 350°C, at least about 360°C, at least about 370°C, at least about 380°C, at least about 390°C, or at least about 400°C. At lower temperatures, the hydrocarbon oil and/or hydrocarbon melt tends to have too high a viscosity (although, of course, this depends on the nature of the hydrocarbon oil and/or hydrocarbon melt). Furthermore, both the hydrocarbon oil and/or hydrocarbon melt and the bio-oil vapour tend to be insufficiently reactive at lower temperatures. Preferably, the temperature in the reaction zone is about 600°C or less, preferably about 550°C or less, more preferably 540°C or less, 530°C or less, 520°C or less, 510°C or less or 500°C or less. At higher temperatures, the cracking reaction tends to progress at a very high rate, which leads to smaller molecules being formed. This increases the yield of gases, and reduces the yield of useful liquid products. Additionally, at high temperatures, large amounts of carbon may be produced, which can accumulate in the reactor and cause clogging.

Typically, when hydrocarbon oil and/or hydrocarbon melt is heated alone, it is not cracked, or is cracked very slowly, within the above temperature ranges. (Similarly, typically when bio-oil vapour is heated alone, it is not gasified, or is gasified very slowly, within the above temperature ranges.) Thus, in the preferred embodiments of the invention, the useful products of the process are significantly increased by heating a combination of the hydrocarbon oil and/or hydrocarbon melt with the bio-oil compared with the same hydrocarbon oil and/or hydrocarbon melt alone (or the same bio-oil alone) under the same physical conditions of temperature and pressure.

The products of the reactions occurring in the reaction zone are preferably removed from the reaction zone as a vapour (or as a mixture of non-condensable gases and vapour, in the manner explained below). Preferably, the vaporous products are transferred to a condenser which is in fluid communication with the reaction zone.

Permanent gases, such as CH₄, CO₂, CO and H₂ are not condensed in the condenser. The permanent gases may be transferred to a combined heat and power unit (CHP), which may be used to provide heat and/or power for the processes described herein.

The remaining vapours may be condensed to provide liquid products. Typically, the liquid products are separated into separate phases in the condenser. Typically, the phases include an aqueous phase containing predominantly water, a bio-oil phase containing bio-oil (e.g. which has not been fully reacted in the reaction zone), and a cracked reaction product phase.

This bio-oil phase may be returned to the pyrolysis reactor to vaporise it, from where it is flowed as a vapour into the reaction zone for further reaction. Alternatively, the bio-oil may be put to an alternative use, for example as a fuel.

Typically, the cracked reaction product phase includes hydrocarbon molecules. The present inventors have realised that hydrocarbon products, such as linear hydrocarbon products such as alkanes and alkenes, can be produced even where oil or melt which is not a hydrocarbon oil and/or hydrocarbon melt is used, such as non-hydrocarbon bio-derived oils and fats, and polyvinyl chloride. Without wishing to be bound by theory, this is believed to be due to destabilisation of bonds to atoms other than carbon and hydrogen by the bio-oil radicals.

For example, the cracked reaction product may include at least 50%, at least 60%, at least 70%, at least 80%, at least 90% or at least 95% by weight hydrocarbon molecules, such as alkane, alkene and/or aromatic molecules. Preferably, at least 30%, at least 40%, least 50%, at least 55%, at least 60%, at least 65%, at least 70%, at least 80%, at least 90% or at least 95% by weight hydrocarbon molecules are alkane and/or alkene molecules.

Typically, the hydrocarbon molecules each have at least about 10 carbon atoms, for example at least about 12 carbon atoms. Typically, the hydrocarbon molecules each have about 20 carbon atoms or fewer. For example, at least 40%, at least 50%, at least 55%, at least 60%, at least 65%, at least 70%, at least 80%, at least 90% or at least 95% by weight of the hydrocarbon molecules may have at least about 10 or at least about 12 carbon atoms, and may have about 30 carbon atoms or fewer, more preferably 25 or 20 carbon atoms or fewer. Typically, hydrocarbon molecules having a higher number of carbon atoms are not vaporised in the reaction zone and so are not removed from the reaction zone.

A cracked reaction product may be obtained or obtainable by a method according to the present invention. It will be understood that the term "cracked reaction product" includes products produced in the reaction zone as described herein, and also includes products which have been further refined, for example as described herein. The cracked reaction product may be, for example, a fuel, such as a diesel fuel.

Typically, the cracked reaction product phase is useful as a fuel, e.g. a fuel oil. It may be used as it is, or may be further refined. For example, it may be fractionated, in a similar way to crude oil. In this way, fuel oil fractions each having a narrower range of molecular weights may be obtained.

The present inventors have found that the cracked reaction product phase typically includes alkene molecules (having one or more carbon-carbon double bonds). This can be undesirable, since typically fuels such as diesel contain mostly saturated hydrocarbons, along with some aromatic hydrocarbon compounds. Accordingly, the cracked reaction product may be hydrogenated e.g. to reduce its alkene content, in a hydrogenation reactor. For example, the cracked reaction product may be transferred from the condenser to the hydrogenation reactor, which may be in fluid communication with the condenser via a cracked reaction product port.

Suitable hydrogenation methods will be known to the skilled person. Any suitable hydrogenation method may be used, such as catalytic hydrogenation for example with a nickel-based or platinum catalyst.

Conveniently, hydrogen for the hydrogenation may at least in part be provided by (incomplete) gasification of char produced in the methods of the present invention. As described above, the reaction zone may be connected to a pyrolysis reactor, which provides bio-oil by pyrolysis of biomass. This biomass pyrolysis also produces char. This char may be gasified or reformed in a char gasification reactor. Typically, char from the pyrolysis reactor is transferred to the char gasification reactor and gasified in the presence of air and steam, to produce ash, CO and H₂. The hydrogen may be transferred to the hydrogenation reactor via a hydrogen port. Producing the hydrogen for hydrogenation on site is convenient and may lower the costs and improve the efficiency of the overall process.

Conveniently, the steam for the gasification of the char may be provided from the aqueous phase produced in the condenser.

Production of hydrogen from char produced from biomass pyrolysis and steam produced in the reaction zone can significantly reduce the amount of waste produced by the process. The present inventors have realised that this *in situ* production of hydrogen from (waste) products of other processes is a novel process in itself.

Accordingly, the present invention provides a hydrogen generating process comprising
pyrolysing biomass to produce char and bio-oil;
processing the bio-oil to produce products including water and/or steam; and
combusting the char in the presence of the water and/or steam to produce hydrogen.

It will be understood that the hydrogen may be used to hydrogenate reaction products, e.g. reaction products of the bio-oil processing step.

The CO (and any hydrogen not used for hydrogenation) produced in the char gasification reactor may be transferred to a CHP unit, to provide heat and power, via a gas port. Alternatively or additionally, it may be used to synthesise fuel.

Hydrogen (and optionally CO), e.g. produced in the char gasification reactor, may be introduced into the pyrolysis reactor. This can help to refine the fuel product produced in the reaction zone, for example by increasing its hydrogen content (e.g. the fuel products have fewer Carbon-carbon double bonds). Alternatively or additionally, hydrogen (and optionally CO) may be introduced into the bio-oil vapour inlet conduit and/or into the reaction zone itself.

Ash, produced for example in the char gasification reactor, may be useful as a fertilizer. In this way, it will be understood that the total waste products of the process may be very low, for example approaching zero.

In order to provide increased control of the reactions occurring in the reaction zone, a reflux column may be provided, to return some vapours to the reaction zone as liquids. For example, molecules with boiling point above a predetermined level may condense in the reflux column and be returned to the reaction zone. In this way, for example, the average size of molecules in the cracking reaction product can be reduced, as larger cracking reaction products (and "un-cracked" molecules) are returned to the reaction zone for (further) cracking. Vapours not returned to the reaction zone by the reflux column may pass to the condenser for condensing, for example to produce the liquid product phases described above. The reflux column may be, for example, a fractional distillation column.

In the above discussion, the cracking reaction products are sometimes referred to as products of hydrocarbon oil and/or hydrocarbon melt cracking. However, it will readily be understood that some components of the bio-oil vapour will likely be present in the cracking reaction product. For example, alkane, alkene and alcohol fragments from molecules in the bio-oil may be present in the cracking reaction product phase. This may be advantageous. The presence of bio-oil derived fragments in the cracking reaction product means that where it is used as a fuel, a proportion of the energy of the fuel is bio-derived energy. For example, up to about 25% of the energy in the fuel may be bio-derived energy. Accordingly, the fuel can be considered to be relatively environmentally friendly. This bio-derived energy content is larger than the residual bio-derived energy for example in petrol, diesel and natural gas synthesised from syngas.

It will also be understood that some of the hydrocarbon oil and/or hydrocarbon melt may be cracked into gaseous molecules, such as methane or ethane.

An apparatus suitable for the method of the invention will now be described, with reference to Figure 1.

Figure 1 shows fuel production apparatus suitable for the method of the present invention. The apparatus has a reaction chamber 1 filled with oil 2. Oil is supplied to the reaction chamber by a feed port 3. The reaction zone further has a settling unit 4 and mixing units 5. Bio-oil vapour is supplied to the reaction chamber via a bio-oil inlet conduit 6, which is an elongate passage.

A liquid conduit 7 is provided. Oil 2 from the reaction chamber 1 overflows into the liquid conduit 7, and is transferred to the bio-oil inlet conduit 6 at a position distal from the reaction chamber 1. An atomiser is provided to atomise the hydrocarbon oil and/or hydrocarbon melt from the reaction chamber as it enters the inlet conduit. In this way, oil 2 from the reaction chamber 1 flows along the bio-oil inlet conduit, to reduce or prevent build-up of solid residue in the bio-oil inlet conduit 6.

A pyrolysis reactor 8 is provided, for producing the bio-oil vapour. Biomass feedstock 9 is supplied to the pyrolysis reactor 8 via a port 10.

A condenser 11 is provided, which is connected to the reaction chamber by a condenser conduit 12. The condenser conduit 12 is positioned near the top of the reaction chamber 1, for removal of vaporous reaction products from the reaction chamber 1.

Non-condensable gases are transferred to a combined heat and power unit 13, to provide power and heat to the apparatus.

The vapour is condensed to provide a cracked reaction product 14, bio-oil 15 and water 16.

The bio-oil 15 is transferred back to the pyrolysis reactor 8. It is then transferred back to the reaction chamber 1 as a vapour.

The cracked reaction product 14 contains mostly hydrocarbons, which are typically unsaturated. The cracked reaction product 14 is transferred to a hydrogenation reactor 17. Hydrogen for the hydrogenation reactor is supplied from a char gasification reactor 18. Char from the pyrolysis reactor 8 is transferred to the char gasification reactor 18. The char is gasified in the char gasification reactor 18 in the presence of air and steam. The steam is provided to the char gasification reactor 18 via a steam conduit 19, which carries water 16 from the condenser 12. The water is heated to form steam via a coil 20 surrounding the bio-oil inlet conduit 6.

Gases produced in the char gasification reactor 18 are transferred to the hydrogenation reactor 17, the CHP unit 13 and optionally the pyrolysis reactor 8. Ash is removed from the char gasification reactor 18.

Hydrogenated cracked reaction product is removed from the hydrogenation reactor 17. Typically, this product is suitable for use as diesel fuel.

In the methods of the present invention, typically, about 80% of the biomass feedstock added to the pyrolysis reactor is gasified or incorporated into the cracked reaction product as described above. (This includes products of bio-oil processing in the reaction zone, and the gaseous products of char gasification in the char gasification reactor.) The remainder of the biomass is typically ash and water. Typically, about 30% of the hydrocarbon oil and/or hydrocarbon melt is converted into cracking reaction product, while about 10% forms a solid residue and the remainder forms gas, which can be used in the CHP unit.

The preferred embodiments have been described by way of example only. Modifications to these embodiments, further embodiments and modifications thereof will be apparent to the skilled person on reading this disclosure.

### REFERENCES

1. Fogassy, G. et al, App. Cat. B: Environ. 96 (2010) 476-485
2. de Miguel Marcader, F. et al, App. Cat. B: Environ. 96 (2010) 57-66
3. Elliot, D., Energy & Fuels 2007 21 1792-1815
4. Balduaf, W. et al, Biomass and Bioenergy Vol. 7 Nos. 1-6 237-244, 1994
5. de Miguel Marcader, F. et al, Energy Environ. Sci. Jan 2011 (DOI: 10.1039/c0ee00523a)
6. Darmstadt, H. et al, Carbon 39 (2001) 815-825
7. Garcia-Perez, M. et al, Fuel 81 (2002) 893-907
8. Garcia-Perez, M. et al, Fuel 80 (2001) 1245-1258
9. Kuznetsov, B.N. et al, Int. J. Hydrogen Energy 34 (2009) 7051-7056
10. Brebu, M. et al, Fuel 89 (2010) 1911-1918
11. Rutkowski, P., Waste Management 29 (2009) 2983-2993
12. Paradela, F. et al, Clean Techn. Environ. Policy (2009) 11:115-122
13. Sharypov, V.I. et al, J. Ana. & App. Pyrolysis 64 (2002) 15-28
14. Marin, N. et al, J. Ana. & App. Pyrolysis 65 (2002) 41-55
15. Sharypov, V.I. et al, J. Ana. & App. Pyrolysis 67 (2003) 325-340
16. Sharypov, V.I. et al, J. Ana. & App. Pyrolysis 76 (2006) 265-270

## Claims

1. A method for the production of fuel, the method comprising:
flowing bio-oil vapour, from externally of a reactor, into a reaction zone of the reactor;
supplying a hydrocarbon oil and/or hydrocarbon melt to the reaction zone as a liquid;
heating together in the reaction zone (i) the bio-oil vapour and (ii) the hydrocarbon oil and/or hydrocarbon melt, to carry out cracking; and
extracting cracked reaction products.

2. A method according to claim 1 wherein the bio-oil vapour and hydrocarbon oil and/or melt are heated together without the addition of catalyst.

3. A method according to any one of the preceding claims wherein the bio-oil vapour and hydrocarbon oil and/or melt is heated to a temperature in the range from 350°C to 550°C.

4. A method according to any one of the preceding claims wherein the hydrocarbon oil and/or melt is selected from petroleum, a petroleum fraction, a synthetic hydrocarbon and mixtures thereof.

5. A method according to any one of the preceding claims wherein the hydrocarbon oil and/or melt comprises predominantly C₂₀ to C₅₀ hydrocarbons.

6. A method according to any one of the preceding claims, further comprising pyrolysing biomass and flowing bio-oil vapour produced by said biomass pyrolysis into the reaction zone via a bio-oil input port.

7. A method according to any one of the preceding claims, comprising producing a cracked reaction product comprising alkenes and hydrogenating the cracked reaction product to produce a hydrogenated product.

8. A method according to claim 7 wherein hydrogen for the hydrogenation of the cracked reaction product is at least partially produced by gasification of char.

9. A method according to claim 8 wherein said char is at least partially produced by biomass pyrolysis, for example a biomass pyrolysis process used to produce said bio-oil vapour.

## Patentansprüche

1. Verfahren zur Herstellung von Brennstoff, wobei das Verfahren Folgendes umfasst:
Strömenlassen von Bioöldampf von außerhalb eines Reaktors in eine Reaktionszone des Reaktors;
Zuführen von Kohlenwasserstofföl und/oder Kohlenwasserstoffschmelze zur Reaktionszone als Flüssigkeit;
gemeinsames Erhitzen (i) des Biodampföls und (ii) des Kohlenwasserstofföls und/oder der Kohlenwasserstoffschmelze in der Reaktionszone, um Cracken durchzuführen; und
Extrahieren von gecrackten Reaktionsprodukten.

2. Verfahren nach Anspruch 1, wobei der Bioöldampf und das Kohlenwasserstofföl und/oder die Kohlenwasserstoffschmelze ohne Zusetzen eines Katalysators gemeinsam erhitzt werden.

3. Verfahren nach einem der vorhergehenden Ansprüche, wobei der Bioöldampf und das Kohlenwasserstofföl und/oder die Kohlenwasserstoffschmelze auf eine Temperatur im Bereich von 350 °C bis 550 °C erhitzt werden.

4. Verfahren nach einem der vorhergehenden Ansprüche, wobei das Kohlenwasserstofföl und/oder die Kohlenwasserstoffschmelze ausgewählt sind aus Petroleum, einer Petroleumfraktion, einem synthetischen Kohlenwasserstoff und Gemischen davon.

5. Verfahren nach einem der vorhergehenden Ansprüche, wobei das Kohlenwasserstofföl und/oder die Kohlenwasserstoffschmelze überwiegend C₂₀- bis C₅₀-Kohlenwasserstoffatome umfassen.

6. Verfahren nach einem der vorhergehenden Ansprüche, ferner umfassend die Pyrolyse von Biomasse und das Strömenlassen von durch Biomassepyrolyse hergestelltem Bioöldampf in die Reaktionszone über einen Bioöleinlassanschluss.

7. Verfahren nach einem der vorhergehenden Ansprüche, umfassend das Erzeugen eines gecrackten Reaktionsprodukts, umfassend Alkene, und Hydrogenieren des gecrackten Reaktionsprodukts zur Erzeugung eines hydrogenierten Produkts.

8. Verfahren nach Anspruch 7, wobei Wasserstoff für die Hydrogenierung des gecrackten Reaktionsprodukts zumindest teilweise durch Vergasung von Kohle hergestellt wird.

9. Verfahren nach Anspruch 8, wobei die Kohle zumindest teilweise durch Biomassepyrolyse, beispielsweise ein Biomassepyrolyseverfahren zur Erzeugung von Bioöldampf, erzeugt wird.

## Revendications

1. Procédé de production de carburant, le procédé comprenant :
la circulation d'une vapeur de bio-huile, à partir de l'extérieur d'un réacteur, dans une zone de réaction du réacteur ;
l'alimentation d'une huile hydrocarbonée et/ou d'une matière fondue hydrocarbonée vers la zone de réaction en tant que liquide ;
le chauffage dans la zone de réaction (i) de la vapeur de bio-huile et (ii) de l'huile hydrocarbonée et/ou de la matière fondue hydrocarbonée ensemble, pour réaliser le craquage ; et
l'extraction des produits réactionnels craqués.

2. Procédé selon la revendication 1, dans lequel la vapeur de bio-huile et l'huile hydrocarbonée et/ou la matière fondue hydrocarbonée sont chauffées ensemble sans l'addition de catalyseur.

3. Procédé selon l'une quelconque des revendications précédentes, dans lequel la vapeur de bio-huile et l'huile hydrocarbonée et/ou la matière fondue hydrocarbonée sont chauffées à une température comprise dans la plage allant de 350 °C à 550 °C.

4. Procédé selon l'une quelconque des revendications précédentes, dans lequel l'huile et/ou la matière fondue hydrocarbonée est choisie parmi le pétrole, une fraction de pétrole, un hydrocarbure synthétique et des mélanges de ceux-ci.

5. Procédé selon l'une quelconque des revendications précédentes, dans lequel l'huile et/ou la matière fondue hydrocarbonée comprend principalement des hydrocarbures en C₂₀ à C₅₀.

6. Procédé selon l'une quelconque des revendications précédentes, comprenant en outre la pyrolyse de biomasse et la circulation d'une vapeur de bio-huile produite par ladite pyrolyse de biomasse dans la zone de réaction par le biais d'un orifice d'entrée de bio-huile.

7. Procédé selon l'une quelconque des revendications précédentes, comprenant la production d'un produit réactionnel craqué comprenant des alcènes et l'hydrogénation du produit réactionnel craqué pour produire un produit hydrogéné.

8. Procédé selon la revendication 7, dans lequel l'hydrogène pour l'hydrogénation du produit réactionnel craqué est au moins partiellement produit par gazéification de charbon.

9. Procédé selon la revendication 8, dans lequel ledit charbon est au moins partiellement produit par la pyrolyse de biomasse, par exemple un procédé de pyrolyse de biomasse utilisé pour produire ladite vapeur de bio-huile.
